# EUROPEAN PATENT APPLICATION

(11) **EP 4 657 574 A2**
(43) Date of publication of application: **03.12.2025**
(21) Application number: 25179174.5
(22) Date of filing: 27.05.2025
(51) Int. Cl.: H01M 4/66, H01M 4/62

(54) **ELECTRODE FOR RECHARGEABLE LITHIUM BATTERY AND RECHARGEABLE LITHIUM BATTERY INCLUDING THE SAME**

(30) Priority: 28.05.2024 KR 20240069141
(71) Applicant: SAMSUNG SDI CO., LTD., Yongin-si, Gyeonggi-do 17084 (KR)
(72) Inventor: PARK, Hae Ryung, 16678 Suwon-si (KR)
(74) Representative: Marks & Clerk LLP

(57) **Abstract**

The present disclosure relates to an electrode for a rechargeable lithium battery and a rechargeable lithium battery including the electrode. The electrode for a rechargeable lithium battery includes a current collector, and an active material layer on the current collector. The current collector includes a base having a surface on which an irregular pattern is formed and a carbon material- and binder-containing layer laminated on the surface. The active material layer is on the carbon material- and binder-containing layer.

## Description

### BACKGROUND

### 1. Field of the Disclosure

The present disclosure relates to an electrode for a rechargeable lithium battery, and a rechargeable lithium battery including the electrode.

### 2. Discussion of Related Art

With increasing presence of electronic devices that use batteries, such as, e.g., mobile phones, laptop computers, electric vehicles, and the like, the demand for rechargeable batteries with high energy density and high capacity has increased. Accordingly, improving performance of rechargeable lithium batteries may be advantageous.

A rechargeable lithium battery typically includes a positive electrode and a negative electrode including an active material that allows for intercalation and deintercalation of lithium ions and an electrolyte, and produces electrical energy through an oxidation-reduction reaction taking place when the lithium ions are intercalated and deintercalated to and from the positive electrode and the negative electrode.

Lithium iron phosphorus oxide may be included as an active material for a positive electrode. For example, a silicon-based active material may be included as an active material for a negative electrode. The lithium iron phosphorus oxide and the silicon-based active material each have high interfacial resistance and low intrinsic conductivity. Therefore, for an electrode including the lithium iron phosphorus oxide or the silicon-based active material, it may be advantageous to increase the electrical conductivity and energy density of the electrode and decrease battery resistance.

### SUMMARY

One example embodiment includes an electrode for a rechargeable lithium battery which electrical conductivity and energy density are increased and battery resistance is decreased.

Another example embodiment includes a rechargeable lithium battery including the electrode for a rechargeable lithium battery.

One example embodiment includes an electrode for a rechargeable lithium battery.

The electrode for a rechargeable lithium battery includes a current collector, and an active material layer on the current collector. The current collector includes a base having a surface on which an irregular pattern is formed and a carbon material- and binder-containing layer laminated on the surface. The active material layer is on the carbon material- and binder-containing layer.

Another example embodiment includes a rechargeable lithium battery.

The rechargeable lithium battery includes the electrode for a rechargeable lithium battery, and a counter electrode facing the electrode.

At least some of the above and other features of the invention are set out in the claims.

### BRIEF DESCRIPTION OF THE DRAWINGS

FIGS. 1 to 4 are cross-sectional views schematically illustrating rechargeable lithium batteries, according to example embodiments.
FIG. 5 is a cross-sectional view schematically illustrating an electrode, according to example embodiments.

### DETAILED DESCRIPTION

Hereinafter, example embodiments of the present disclosure are described in detail. However, the embodiments are presented as examples, and the present disclosure is not limited by the embodiments. The present disclosure is defined only by the scope of the claims below.

Unless particularly mentioned otherwise in the present specification, when a part such as a layer, film, region, plate, or the like is described as being "on" another part, this not only includes a case in which the part is "directly on" the other part, but also includes a case in which still another part is present therebetween.

Unless particularly mentioned otherwise in the present specification, a singular expression may include a plural expression. Further, unless particularly mentioned otherwise, "A or B" may indicate including A, including B, or including A and B.

In the present specification, "a combination thereof" may indicate a mixture, stack, composite, copolymer, alloy, blend, and reaction product of constituents.

Unless otherwise defined in the present specification, "particle diameter" may be an average particle diameter. Also, "particle diameter" refers to an average particle diameter D50 which is a diameter of a particle with a cumulative volume of 50% by volume in a particle diameter distribution. The average particle diameter D50 may be measured by methods known to those skilled in the art. For example, the average particle diameter D50 may be measured using a particle size analyzer, a transmission electron microscope photograph, or a scanning electron microscope photograph. As another method, an average particle diameter D50 value may be obtained by measuring the particle diameter using a measuring device using dynamic light-scattering, performing data analysis to count the number of particles for each particle size range, and then calculating the particle diameter therefrom. Alternatively, an average particle diameter D50 may be measured using a laser diffraction method. For example, when measuring an average particle diameter D50 using a laser diffraction method, particles to be measured may be dispersed in a dispersion medium, introduced into a commercially available laser diffraction particle diameter measurement apparatus (for example, MT3000 of Microtrac, Inc.), and irradiated with ultrasonic waves of about 28 kHz at an output of 60 W, and then the average particle diameter D50 may be calculated based on 50% of a particle diameter distribution in the measurement apparatus.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

An electrode for a rechargeable lithium battery according to one example embodiment includes a current collector, and an active material layer on the current collector. The current collector includes a base having a surface on which an irregular pattern is formed and a carbon material- and binder-containing layer laminated on the surface of the base. The active material layer is on the carbon material- and binder-containing layer.

The electrode for a rechargeable lithium battery according to one example embodiment may be or include a positive electrode or a negative electrode depending on the type of active material in the active material layer.

### Active material layer

An active material layer includes an active material. The active material layer is located on a current collector

**When the active material is an active material for a positive electrode of a rechargeable lithium battery:**
According to one example embodiment, the active material may be or include an active material for a positive electrode of a rechargeable lithium battery.

According to one example embodiment, the active material may be or include a nano-sized active material. For example, the active material may have a particle diameter D50 that is in a range of about 500 nm or less, for example, that ranges from 1 nm to 10 nm, from 10 nm to 100 nm, or from 50 nm to 200 nm.

According to one example embodiment, the active material may be or include a lithium transition metal phosphorus oxide. As an electrode including a nano-sized lithium transition metal phosphorus oxide as an active material, that is, a positive electrode for a rechargeable lithium battery, includes the current collector, the electrode may be advantageous in increasing the energy density and stability of the battery.

For example, the lithium transition metal phosphorus oxide may be or include a compound of Chemical Formula 1 below:

Chemical Formula 1: LiₐMPO₄.

In Chemical Formula 1 above,
0.9 ≤ a ≤ 1.1,
and M is or includes one or more of Fe, Mn, Ni, and Co.

In examples, the lithium transition metal phosphorus oxide may be or include lithium iron phosphorus oxide, for example, LiFePO₄.

According to one example embodiment, the lithium transition metal phosphorus oxide may be included in an amount ranging from about 90 wt% to about 99.5 wt%, for example, from about 92 wt% to about 98 wt%, about 94 wt% to about 97 wt%, or about 95 wt% to about 96 wt%, of the active material layer. Within the above range, the lithium transition metal phosphorus oxide may be advantageous in increasing the energy density and stability of the battery.

According to one example embodiment, the lithium transition metal phosphorus oxide, for example, lithium iron phosphorus oxide, may be included in an amount in a range of about 95 wt% or more, for example, an amount ranging from about 99 wt% to about 99.5 wt% or an amount of 100 wt%, of the entire active material of the active material layer. Within the above range, the lithium transition metal phosphorus oxide may be advantageous in increasing the energy density and stability of the battery.

According to one example embodiment, the active material layer may include only a lithium transition metal phosphorus oxide, for example, lithium iron phosphorus oxide, as an active material. According to another example embodiment, the active material layer may further include one or more of lithium nickel oxide, lithium cobalt oxide, lithium manganese oxide, cobalt-free nickel-manganese oxide, or a combination thereof, in addition to the lithium transition metal phosphorus oxide.

According to one example embodiment, the content of the active material may range from about 90 wt% to about 99.5 wt% (e.g. from about 92 wt% to about 98 wt%, about 94 wt% to about 97 wt%, or about 95 wt% to about 96 wt%) with respect to 100 wt% of the active material layer. Within the above range, there may be effects of increasing conductivity and energy density.

The active material may be prepared using a general method known to those skilled in the art or that may be commercially available.

The active material layer may further include a binder and/or a conductive additive.

According to one example embodiment, the binder is configured to allow the active material particles to be bonded to each other and allow the positive electrode active material to be bonded to a current collector. Representative examples of the binder may include a polymer including at least one of polyvinyl alcohol, carboxymethyl cellulose, hydroxypropyl cellulose, diacetyl cellulose, polyvinyl chloride, carboxylated polyvinyl chloride, polyvinyl fluoride, and ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acryl resin, polyester resin, nylon, and the like, but are not limited thereto. The content of the binder (e.g. polyvinylidene fluoride) may range from about 0.5 wt% to about 5 wt% (e.g. about 1 wt% to about 5 wt%, about 2 wt% to about 5 wt%, about 3 wt% to about 5 wt%, or about 4 wt% to about 5 wt%) with respect to 100 wt% of the active material layer.

The conductive additive is included to impart conductivity to an electrode, and any electronically conductive material that does not cause chemical changes in the battery may be included as the conductive additive in the battery. Examples of the conductive additive may include carbon-based materials such as at least one of natural graphite, artificial graphite, carbon black, acetylene black, ketjen black, carbon fibers, carbon nanofibers, and carbon nanotubes; metal-based materials in the form of metal powder or metal fibers and including at least one of copper, nickel, aluminium, silver, and the like; conductive polymers such as polyphenylene derivatives; or a mixture thereof. The content of the conductive additive (e.g. carbon black) may range from about 0.5 wt% to about 5 wt% (e.g. about 1 wt% to about 4 wt%, about 1 wt% to about 3 wt%, or about 1 wt% to about 2 wt%) with respect to 100 wt% of the active material layer.

The content of the active material may range from about 90 wt% to about 99.5 wt% with respect to 100 wt% of the active material layer, and the content of the binder and the content of the conductive additive may each range from about 0.5 wt% to about 5 wt% with respect to 100 wt% of the active material layer.

**When the active material is an active material for a negative electrode of a rechargeable lithium battery:**
According to one example embodiment, the active material may be or include an active material for a negative electrode of a rechargeable lithium battery.

The active material may be or include a nano-sized active material. For example, the active material may have a particle diameter D50 that is in a range of about 500 nm or less, for example, that ranges from 1 nm to 10 nm, from 10 nm to 100 nm, or from 10 nm to 50 nm.

According to one example embodiment, the active material may be or include a silicon-based negative electrode active material. As an electrode including a nano-sized silicon-based negative electrode active material as an active material, that is, a negative electrode for a rechargeable lithium battery, includes the current collector, the electrode may be advantageous in increasing the energy density and stability of the battery.

For example, the silicon-based negative electrode active material may be or include a silicon-carbon composite. The silicon-carbon composite may include a silicon particle and crystalline carbon. The silicon-carbon composite may further include an amorphous carbon layer on at least a portion thereof.

Examples of the crystalline carbon may include graphite such as natural graphite or artificial graphite that is irregular-shaped, plate-shaped, flake-shaped, spherical, or fibrous, and examples of the amorphous carbon may include at least one of soft carbon, hard carbon, mesophase pitch carbide, and calcined coke.

The soft carbon may be obtained from or include at least one of coal-based pitch, petroleum-based pitch, polyvinyl chloride, mesophase pitch, tar, a low-molecular-weight heavy oil, or a combination thereof.

The hard carbon may be obtained from or include at least one of polyvinyl alcohol resin, furfuryl alcohol resin, triton, citric acid, stearic acid, sucrose, polyvinylidene fluoride, carboxymethyl cellulose, hydroxypropyl cellulose, regenerated cellulose, polyvinyl pyrrolidone, polyethylene, polypropylene, an ethylene-propylene-diene monomer (EPDM), polyacrylic acid, polyacrylic sodium, polyacrylonitrile, glucose, gelatin, starch, phenol resin, naphthalene resin, polyamide resin, furan resin, polyimide resin, cellulose resin, styrene resin, epoxy resin, vinyl chloride resin, or a combination thereof.

According to one example embodiment, the silicon-based active material may be included in an amount ranging from about 90 wt% to about 99.5 wt%, for example, from about 92 wt% to about 98 wt%, about 94 wt% to about 98 wt%, or about 95 wt% to about 96 wt%, of the active material layer. Within the above range, the silicon-based active material may be advantageous in increasing the energy density and stability of the battery.

According to one example embodiment, a silicon-based active material, for example, a silicon-carbon composite, may be included in an amount in a range of about 95 wt% or more, for example, an amount ranging from 99 wt% to 99.5 wt% or an amount of 100 wt%, of the entire active material of the active material layer. Within the above range, the silicon-based active material may be advantageous in increasing the energy density and stability of the battery.

According to one example embodiment, the active material layer may include only a silicon-based active material as an active material. According to another example embodiment, the active material layer may further include at least one of a material capable of reversible intercalation/deintercalation of lithium ions, lithium metal, a lithium metal alloy, a material capable of doping and dedoping lithium, or a transition metal oxide, in addition to the silicon-based active material.

The material capable of reversible intercalation/deintercalation of lithium ions is or includes a carbon-based negative electrode active material, and may include, for example, crystalline carbon, amorphous carbon, or a combination thereof. Examples of the crystalline carbon may include graphite such as natural graphite or artificial graphite that is irregular-shaped, plate-shaped, flake-shaped, spherical, or fibrous, and examples of the amorphous carbon may include at least one of soft carbon, hard carbon, mesophase pitch carbide, and calcined coke.

An alloy of lithium and a metal such as or including at least one of Na, K, Rb, Cs, Fr, Be, Mg, Ca, Sr, Si, Sb, Pb, In, Zn, Ba, Ra, Ge, Al, and Sn may be included as the lithium metal alloy (e.g. at least one of Na, K, Rb, Cs, Be, Mg, Ca, Sr, Si, Sb, Pb, In, Zn, Ba, Ge, Al, and Sn).

An Sn-based negative electrode active material may be included as the material capable of doping and dedoping lithium. The Sn-based negative electrode active material may be or include at least one of Sn, SnO₂, an Sn-based alloy, or a combination thereof.

According to one example embodiment, the content of the active material may range from about 90 wt% to about 99.5 wt% (e.g. about 92 wt% to about 98 wt%, about 94 wt% to about 98 wt%, or about 95 wt% to about 96 wt%) with respect to 100 wt% of the active material layer. Within the above range, there may be an increase in conductivity and energy density.

The active material may be prepared using, e.g., a general method known to those skilled in the art, or may be commercially available.

The active material layer may further include a binder and/or a conductive additive.

The binder is configured to allow the active material particles to be bonded to each other, and allow the negative electrode active material to be bonded to a current collector. As the binder, a nonaqueous binder, an aqueous binder, a dry binder, or a combination thereof may be included. The content of the binder (e.g. styrene-butadiene rubber) may range from about 0.5 wt% to about 5 wt% (e.g. about 1 wt% to about 4 wt%, or about 2 wt% to about 3 wt%) with respect to 100 wt% of the active material layer.

Examples of the nonaqueous binder may include at least one of polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, and a combination thereof.

When the aqueous binder is included as the negative electrode binder, a cellulose-based compound that can impart viscosity may be further included. As the cellulose-based compound, at least one of carboxymethyl cellulose, hydroxypropyl methyl cellulose, methyl cellulose, alkali metal salts thereof, or a mixture of one or more thereof, may be included. At least one of Na, K, or Li may be included as the alkali metal.

The dry binder is a polymer material that can be fibrillated and may be or include, for example, at least one of polytetrafluoroethylene, polyvinylidene fluoride, a polyvinylidene fluoride-hexafluoropropylene copolymer, polyethylene oxide, or a combination thereof.

The conductive additive is included to impart conductivity to the electrode, and any electronically conductive material that does not cause chemical changes in the battery may be included as the conductive additive in the battery. Examples of the conductive additive may include carbon-based materials such as at least one of natural graphite, artificial graphite, carbon black, acetylene black, ketjen black, carbon fibers, and carbon nanofibers; metal-based materials in the form of metal powder or metal fibers and including at least one of copper, nickel, aluminium, silver, and the like; conductive polymers such as polyphenylene derivatives; or a mixture thereof. The content of the conductive additive (e.g. carbon nanotubes) may range from about 0.5 wt% to about 5 wt% (e.g. about 0.5 wt% to about 4 wt%, about 0.5 wt% to about 3 wt%, or about 0.5 wt% to about 2 wt%, or about 0.5 wt% to about 1 wt%) with respect to 100 wt% of the active material layer.

The active material layer may have a thickness ranging from about 10 µm to about 200 µm. Within the above range, it may be possible to implement the effects of the electrode of the present disclosure.

### Current collector

The electrode for a rechargeable lithium battery includes the current collector, and thus can provide increased electrical conductivity and energy density and decreased battery resistance, thereby providing desired or improved battery characteristics, even when the active material layer includes a nano-sized active material, for example, a lithium transition metal phosphorus oxide and/or a silicon-based active material.

The current collector includes a base having a surface on which an irregular pattern is formed, and a carbon material- and binder-containing layer laminated on the surface of the base. The carbon material- and binder-containing layer may be a single layer comprising a mixture of the carbon material and the binder. The active material layer is located on the carbon material- and binder-containing layer.

The surface on which the irregular pattern is formed may include a concave pattern whose width and depth are in a micro-size range. According to one example embodiment, the carbon material- and binder-containing layer may have a surface on which an irregular pattern corresponding to the concave pattern is formed.

According to one example embodiment, the carbon material- and binder-containing layer and the active material layer may be formed, e.g., sequentially formed, in the concave pattern.

When the carbon material- and binder-containing layer is coated with the nano-sized active material, the micro-sized pattern may be filled with the nano-sized active material. Accordingly, because a region in which the nano-sized active material is present at high density is formed in the active material layer, energy density can be increased, and the contact area can also be increased, thereby increasing electrical conductivity and improving battery characteristics. For example, because the carbon material- and binder-containing layer reduces or prevents corrosion of the base, electrical resistance can be decreased, and thus battery characteristics can be improved.

According to one example embodiment, for example, a depth of the irregular pattern may be larger than a particle diameter of the nano-sized active material. For example, the depth may range from about 0.01 µm to about 3 µm, for example, from 0.01 µm to 0.1 µm, for example, 0.1 µm to 1 µm. Within the above range, the pattern can be sufficiently filled with the nano-sized active material, and thus it may be possible to increase energy density and electrical conductivity.

According to one example embodiment, a width of the irregular pattern may be larger than the particle diameter of the nano-sized active material. For example, the width may range from about 1 µm to about 1,000 µm, for example, from 1 µm to 10 µm. Within the above range, the pattern can be sufficiently filled with the nano-sized active material, and thus it may be possible to increase energy density and electrical conductivity.

According to one example embodiment, the irregular pattern may be or include fine irregularities.

According to one example embodiment, the irregular pattern may be formed by etching the base.

The etching of the base may be performed by electrochemical etching or acid etching.

The electrochemical etching is a method in which a surface of the base is oxidized by applying direct current or alternating current power. For example, in one example embodiment, electrochemical etching may use a three-electrode system and may include a reference electrode, a working electrode, and a counter electrode. The base may be immersed in an etching solution in which the reference electrode, the working electrode, and the counter electrode are present.

The electrochemical etching may refer to applying a potential ranging from about 0.1 V to about 2.0 V for a period of time in a range of about 5 seconds to about 100 seconds. For example, the etching solution may include at least one of hydrofluoric acid, nitric acid, phosphoric acid, sulfuric acid, boric acid, methanol, ethanol, sodium hydroxide, and potassium hydroxide. The etching solution may include an acidic or basic solution in addition to the above-listed materials. The temperature of the etching solution may, for example, range from about 0 °C to about 100 °C. The etching temperature may have an advantageous effect on the etching process. An increase in the temperature may increase an etching rate.

The acid etching may refer to immersing the base in an acidic solution.

In one example embodiment, the acid etching may refer to immersing the base in an acidic solution of at least one of hydrochloric acid, phosphoric acid, sulfuric acid, nitric acid, acetic acid, carbonic acid, trifluoroacetic acid, oxalic acid, hydrofluoric acid, boric acid, perchloric acid, and hypochlorous acid at a concentration in a range of about 0.01M to about 2M for a period of time in a range of about 1 second to about 100 seconds.

The above ranges of the depth and width of the irregular pattern may be implemented by adjusting the conditions in the etching process.

According to one example embodiment, aluminium (Al), for example, Al foil, may be included as the base, but the base is not limited thereto.

According to one example embodiment, at least one of copper foil, nickel foil, stainless steel foil, titanium foil, nickel foam, copper foam, a polymer substrate having a conductive metal coated thereon, or a combination thereof, may be included as the base.

The carbon material- and binder-containing layer is configured to facilitate filling the micro-sized irregular pattern with the nano-sized active material, thereby increasing the energy density and electrical conductivity. For example, the carbon material- and binder-containing layer reduces or prevents corrosion of the base, thereby decreasing electrical resistance and improving battery characteristics.

According to one example embodiment, the carbon material- and binder-containing layer may have a thickness ranging from about 0.1 µm to about 10 µm, for example, from 0.1 µm to 1 µm, from 0.1 µm to 5 µm, or from 1 µm to 10 µm. Within the above range, the energy density and electrical conductivity of the active material may still be increased without affecting the ranges of the depth and width of the irregular pattern of the base.

According to one example embodiment, the carbon material is or includes a conductive additive and may include, for example, at least one of graphene, carbon black, acetylene black, ketjen black, carbon fibers, carbon nanotubes, carbon quantum dots, graphene quantum dots, and a carbon material doped with heteroatoms. For example, the carbon material may be or include one or more of carbon black and carbon nanotubes. The carbon black and the carbon nanotubes may make it possible to achieve the above-described effects of the electrode.

According to one example embodiment, a particle diameter D50 of the carbon material may be smaller than the depth and/or width of the irregular pattern. In this case, the effects provided by the carbon material can be obtained.

According to one example embodiment, the particle diameter D50 of the carbon material of the carbon material- and binder-containing layer may be smaller than or equal to a particle diameter D50 of the conductive additive of the active material layer.

The carbon material may be included in an amount ranging from about 90 wt% to about 99.9 wt%, for example, from 95 wt% to 97 wt%, of the carbon material- and binder-containing layer. Within the above range, there may be an effect of improving conductivity.

According to one example embodiment, the binder may be or include an aqueous binder such as or including at least one of styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, polytetrafluoroethylene, polyvinylidene fluoride, a polyvinylidene fluoride-hexafluoropropylene copolymer, polyethylene oxide, polyamide, or a combination thereof.

For example, the binder may include one or more of styrene-butadiene rubber and polyvinylidene fluoride. The styrene-butadiene rubber and polyvinylidene fluoride may make it possible to achieve the above-described effects of the electrode.

The binder may be included in an amount ranging from about 0.1 wt% to about 10 wt%, for example, from 3 wt% to 5 wt%, of the carbon material- and binder-containing layer. Within the above range, there may be effects of increasing adhesion and minimizing electrical resistance.

According to one example embodiment, a total of the carbon material and the binder in the carbon material- and binder-containing layer may be in a range of about 95 wt% or more, for example, 95 wt% to 100 wt%, 98 wt% to 100 wt%, or 100 wt%. Within the above range, there may be effects of increasing adhesion and minimizing electrical resistance.

According to one example embodiment, the active material layer may include at least an active material, a conductive additive, and a binder. The conductive additive of the active material layer may be the same as, or substantially the same as, the carbon material, and the binder of the active material layer may be the same as, or substantially the same as, the binder of the carbon material- and binder-containing layer.

According to one example embodiment, the carbon material- and binder-containing layer may not include the active material.

The carbon material- and binder-containing layer may be prepared by mixing the carbon material and the binder, mixing a mixture thereof with a solvent such as or including N-methyl pyrrolidone, and then coating a base having a surface on which the irregular pattern is formed with the resulting mixture, and drying the mixture and the base.

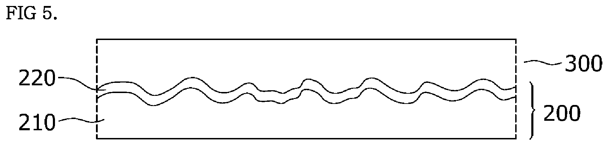

FIG. 5 is a cross-sectional view schematically illustrating an electrode, according to example embodiments.

The electrode includes a current collector 200, and an active material layer 300 on the current collector 200. The current collector 200 includes a base 210 having a surface on which an irregular pattern is formed and a carbon material- and binder-containing layer 220 laminated on the surface. The active material layer 300 is on the carbon material- and binder-containing layer 220.

A rechargeable lithium battery may further include an electrolyte.

### Electrolyte Solution

The electrolyte solution for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

For example, when the solvent is or includes a carbonate-based solvent, a cyclic carbonate and a chain carbonate may be mixed, and the cyclic carbonate and the chain carbonate may be mixed in a volume ratio of about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be or include a polymer film formed of or including any one or more of a polymer polyolefin such as at least one of polyethylene and polypropylene, a polyester such as at least one of polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Rechargeable Lithium Battery

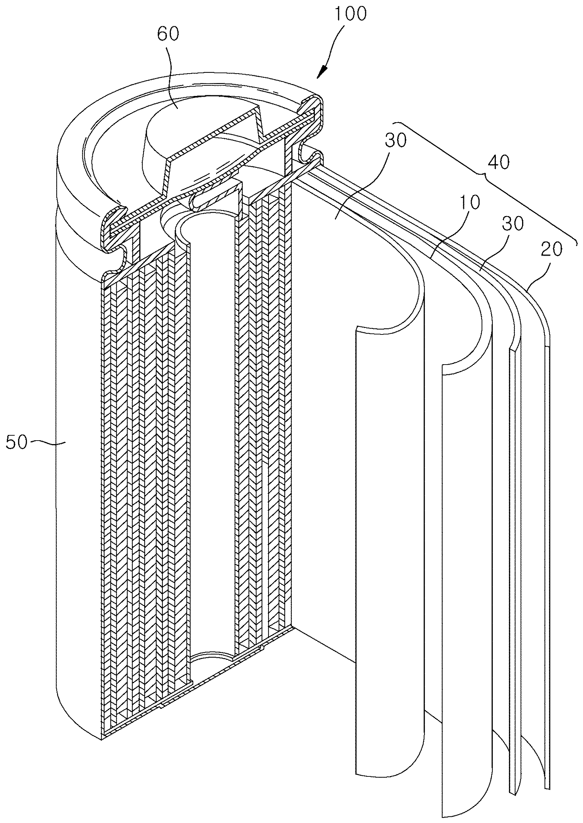

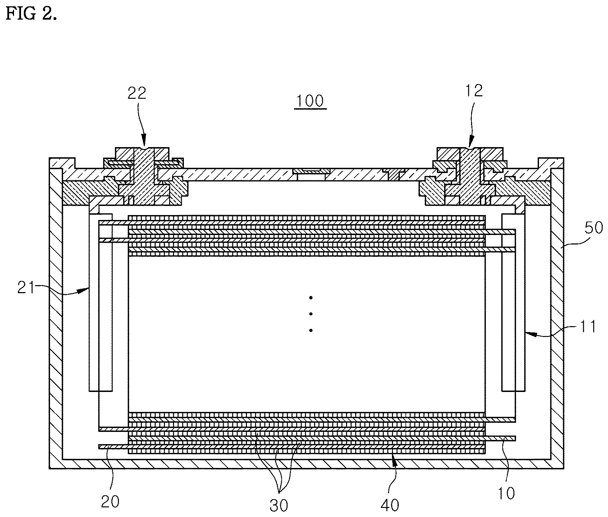

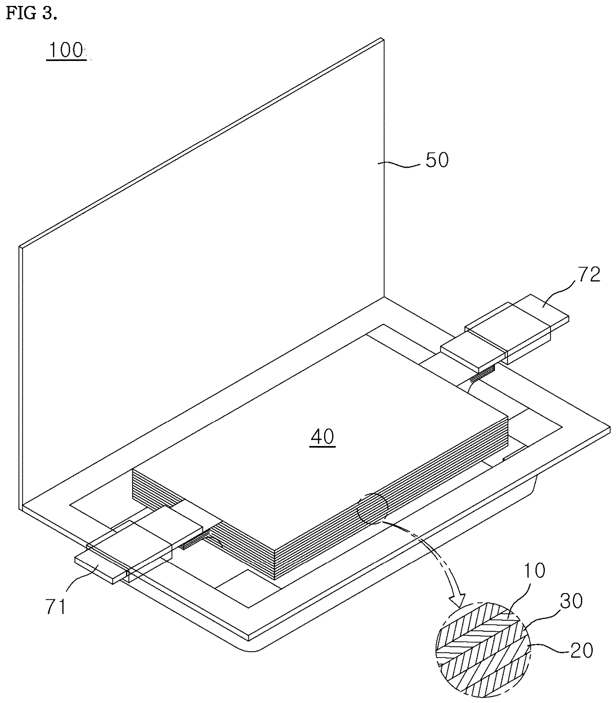

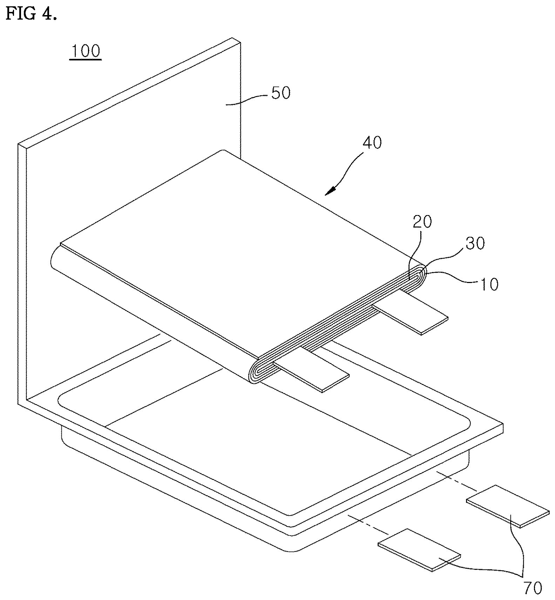

The rechargeable lithium battery may be classified into cylindrical, prismatic, pouch, or coin-type batteries, and the like depending on the shape thereof. FIGS. 1 to 4 are schematic views illustrating rechargeable lithium batteries according to example embodiments. FIG. 1 illustrates a cylindrical battery, FIG. 2 illustrates a prismatic battery, and FIGS. 3 and 4 illustrate pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 may include an electrode tab 70 illustrated in FIG. 4, or, for example, a positive electrode tab 71 and a negative electrode tab 72 illustrated in FIG. 3, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are merely embodiments of the present disclosure, and the present disclosure is not limited to the following examples.

### Example 1: Manufacture of current collector

An irregular pattern was formed on a surface of aluminium foil by etching the surface of the aluminium foil by an electrochemical method of oxidizing the surface of the aluminium foil by applying direct current or alternating current power to the aluminium foil or an acid etching method of immersing the aluminium foil in an acidic solution. The irregular pattern had a depth of 0.5 µm and a width of 5 µm.

5 wt% of polyvinylidene fluoride and 95 wt% of carbon black were dissolved in N-methyl pyrrolidone to prepare a composition, and the composition was coated on the irregular pattern and dried to manufacture a current collector having a layer including polyvinylidene fluoride and carbon black formed on the foil.

### Example 2: Manufacture of positive electrode for rechargeable lithium battery

94.5 wt% of lithium iron phosphorus oxide (particle diameter D50: 10 nm) as a positive electrode active material, 1 wt% of carbon black as a conductive additive, and 4.5 wt% of polyvinylidene fluoride (PVdF) as a binder were mixed, and the mixture was coated on the current collector manufactured in Example 1 above and dried to manufacture a positive electrode.

### Example 3: Manufacture of current collector

An irregular pattern was formed on a surface of copper foil by etching the surface of the copper foil by an electrochemical method of oxidizing the surface of the copper foil by applying direct current or alternating current power to the copper foil or an acid etching method of immersing the copper foil in an acidic solution. The irregular pattern had a depth of 0.5 µm and a width of 5 µm.

3 wt% of styrene-butadiene rubber and 97 wt% of carbon nanotubes were dissolved in N-methyl pyrrolidone to prepare a composition, and the composition was coated on the irregular pattern and dried to manufacture a current collector having a layer including styrene-butadiene rubber and carbon nanotubes formed on the foil.

### Example 4: Manufacture of negative electrode for rechargeable lithium battery

97.5 wt% of silicon-carbon composite (particle diameter D50: 50 nm) as a negative electrode active material, 0.5 wt% of carbon nanotubes as a conductive additive, and 2 wt% of styrene-butadiene rubber as a binder were mixed, and the mixture was coated on the current collector manufactured in Example 3 above and dried to manufacture a negative electrode.

### Comparative Example 1: Manufacture of current collector

A current collector was manufactured in the same manner as in Example 1 with a difference that in Example 1, the carbon material- and binder-containing layer was not formed.

### Comparative Example 2: Manufacture of positive electrode for rechargeable lithium battery

A positive electrode was manufactured in the same manner as in Example 2 using the current collector manufactured in Comparative Example 1.

### Comparative Example 3: Manufacture of current collector

A current collector was manufactured in the same manner as in Example 3 with a difference that in Example 3, the carbon material- and binder-containing layer was not formed.

### Comparative Example 4: Manufacture of negative electrode for rechargeable lithium battery

A negative electrode was manufactured in the same manner as in Example 4 using the current collector manufactured in Comparative Example 3.

The capacity and contact resistance of the positive electrodes and the negative electrodes manufactured in the Examples and Comparative Examples were evaluated.

Capacity measurement and contact resistance measurement:
The positive and negative electrodes of the Examples were applied, and according to etching of the base and the presence/absence of carbon coating, the capacity was measured using a charge/discharge cycler, and the resistance was confirmed by being measured using electrochemical impedance spectroscopy.

**Table 1:**

| Positive electrode | Current rate/C | Capacity/ mAhg⁻¹ | Rs |
|---|---|---|---|
| Comparative Example 2(Al foil) | 0.2 | 128 | 11.5 |
| Example 2(Etched and coated Al foil) | 0.2 | 122 | 6.30 |
| | | | |

| Negative electrode | Current rate/C | Capacity/ mAhg⁻¹ | Rs |
|---|---|---|---|
| Comparative Example 4(Cu foil) | 0.2 | 115 | 10.2 |
| Example 4(Etched and coated Cu foil) | 0.2 | 127 | 5.5 |

As shown in Table 1 above, the positive electrode of the Example and the negative electrode of the Example both have significantly lower contact resistances compared to the Comparative Examples.

An electrode for a rechargeable lithium battery according to one example embodiment can exhibit increased electrical conductivity and energy density and decreased battery resistance, thereby providing desired or improved battery characteristics.

The example embodiments of the present disclosure have been described above, but the present disclosure is not limited thereto. The present disclosure may be modified in various ways within the scope of the claims and the detailed description and the accompanying drawings of the disclosure, and such modifications are within the scope of the present disclosure.

## Claims

1. An electrode for a rechargeable lithium battery, the electrode comprising:
a current collector; and
an active material layer on the current collector,
wherein the current collector includes a base having a surface on which an irregular pattern is formed, and a carbon material- and binder-containing layer laminated on the surface, and
the active material layer is on the carbon material- and binder-containing layer.

2. The electrode of claim 1, wherein the active material layer comprises an active material having a particle diameter D50 in a range of about 500 nm or less.

3. The electrode of claim 1 or claim 2, wherein the active material layer comprises one or more of a lithium transition metal phosphorus oxide and a silicon-carbon composite.

4. The electrode of any one of claims 1 to 3, wherein:
a depth of the irregular pattern is larger than a particle diameter of the active material of the active material layer, and
a width of the irregular pattern is larger than the particle diameter of the active material of the active material layer.

5. The electrode of claim 4, wherein the depth of the irregular pattern ranges from about 0.01 µm to about 3 µm, and the width of the irregular pattern ranges from about 1 µm to about 1,000 µm.

6. The electrode of any one of claims 1 to 5, wherein the carbon material comprises a conductive additive.

7. The electrode of claim 6, wherein the conductive additive comprises at least one of graphene, carbon black, acetylene black, ketjen black, carbon fibers, carbon nanotubes, carbon quantum dots, graphene quantum dots, and a carbon material doped with heteroatoms.

8. The electrode of any one of claims 1 to 7, wherein the binder comprises at least one of styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, polytetrafluoroethylene, polyvinylidene fluoride, a polyvinylidene fluoride-hexafluoropropylene copolymer, polyethylene oxide, and polyamide.

9. The electrode of any one of claims 1 to 8, wherein, in the carbon material- and binder-containing layer:
the carbon material is included in an amount ranging from about 90 wt% to about 99.9 wt%, and
the binder is included in an amount ranging from about 0.1 wt% to about 10 wt%.

10. The electrode of any one of claims 1 to 9, wherein a total of the carbon material and the binder in the carbon material- and binder-containing layer is in a range of about 95 wt% or more.

11. The electrode of any one of claims 1 to 10, wherein:
the active material layer comprises an active material, a conductive additive, and a binder;
the conductive additive of the active material layer is substantially the same as the carbon material; and
the binder of the active material layer is substantially the same as the binder of the carbon material- and binder-containing layer.

12. The electrode of any one of claims 1 to 11, wherein the carbon material- and binder-containing layer does not include the active material.

13. The electrode of any one of claims 1 to 12, wherein the irregular pattern is formed by electrochemical etching or acid etching of the base.

14. The electrode of any one of claims 1 to 13, wherein a particle diameter D50 of the carbon material of the carbon material- and binder-containing layer is smaller than or equal to a particle diameter D50 of the conductive additive of the active material layer.

15. A rechargeable lithium battery comprising the electrode for a rechargeable lithium battery of any one of claims 1 to 14.
